# DEMANDE DE BREVET EUROPEEN

(11) **EP 2 667 106 A1**
(43) Date de publication de la demande: **27.11.2013**
(21) Numéro de dépôt: 13168588.5
(22) Date de dépôt: 21.05.2013
(51) Int. Cl.: F24F 3/06, F24D 3/18, F25B 25/00, F25B 30/02, F25B 13/00

(54) **Kit et méthode de mise en oeuvre d'une installation de régulation de température pour un bâtiment**

(30) Priorité: 22.05.2012 FR 1254651
(71) Demandeur: Compagnie Industrielle D'Applications Thermiques, 01350 Culoz (FR)
(72) Inventeur: Ribo, Ivan, 38410 SAINT MARTIN D'URIAGE (FR)
(74) Mandataire: Myon, Gérard Jean-Pierre

(57) **Abrégé**

Ce kit (1) de mise en oeuvre d'une installation de régulation de température pour un bâtiment comprend une pompe à chaleur (2) comprenant :
- une unité de captage (3), disposée à l'extérieur du bâtiment, pour la transmission de l'énergie thermique captée par l'unité de captage (3) à un circuit primaire (C1) de fluide frigorigène confiné,
- une unité de distribution (4), reliée à l'unité de captage (3) par une conduite-aller (C11) et une conduite-retour (C12) du circuit primaire (C1).

L'unité de distribution (4) transmet l'énergie thermique du circuit primaire (C1) à un liquide caloporteur d'un circuit secondaire, disposé à l'intérieur du bâtiment et alimentant un organe de consommation d'énergie thermique. L'unité de distribution (4) comprend une entrée (E'4) et une sortie (S'4), qui sont reliées entre elles par une portion de conduite (C24), qui font partie de du circuit secondaire et qui sont aptes à coopérer chacune de manière amovible avec respectivement une conduite-retour et une conduite-aller du circuit secondaire.

## Description

La présente invention concerne un kit de mise en oeuvre d'une installation de régulation de température pour un bâtiment, ainsi qu'une méthode de mise en oeuvre d'une telle installation.

Pour chauffer ou rafraichir un bâtiment, il est connu d'utiliser une pompe à chaleur air-eau ou eau-eau. Ces ensembles de pompes à chaleur, qui utilisent un cycle thermodynamique et un fluide frigorigène, comportent principalement un compresseur, un détendeur et deux échangeurs : un échangeur « source » qui échange l'énergie thermique d'une source extérieure et la transmet au fluide frigorigène qui, une fois chauffé ou refroidi lors du cycle thermodynamique, échange de nouveau son énergie thermique avec le liquide caloporteur du circuit hydraulique de chauffage/rafraichissement du bâtiment, via un deuxième échangeur de « distribution hydraulique ». Par exemple, le liquide caloporteur peut être utilisé pour chauffer ou rafraichir le bâtiment via différents types d'émetteurs : planchers chauffants/rafraîchissants, radiateurs, ventilo-convecteurs. Généralement, de l'eau est utilisée en tant que liquide caloporteur.

Une première catégorie de pompes à chaleur, les pompes à chaleur « monobloc », comprennent un corps en une seule partie, qui comprend à la fois l'échangeur « source » et l'échangeur de « distribution hydraulique ». Le corps comporte donc des raccordements de conduites pour la circulation du liquide caloporteur. Le fluide frigorigène est confiné dans un circuit fermé réalisé en usine, lors de la fabrication de la pompe à chaleur. L'opérateur qui installe la pompe à chaleur ne manipule donc pas le fluide frigorigène, ce qui est avantageux.

Les pompes à chaleur monobloc peuvent être installées à l'intérieur ou à l'extérieur du bâtiment. Lorsqu'elles sont installées à l'extérieur, le mur du bâtiment est percé pour le passage des conduites de circulation du liquide caloporteur. Le liquide caloporteur est parfois soumis au gel. Il est donc nécessaire d'incorporer un antigel dans le liquide caloporteur. Généralement, du glycol est employé. Cet additif coûte relativement cher. De plus, il pénalise les performances énergétiques de l'installation, car il augmente la viscosité du liquide caloporteur. Il implique donc d'utiliser des pompes plus puissantes pour le faire circuler. En outre, les échanges thermiques avec le liquide caloporteur sont moins bons que lorsqu'il s'agit d'eau pure. Il est possible de ne pas utiliser d'antigel mais cela induit un risque important de casse machine lié au gel lors de pannes, même avec des dispositifs de vidange automatique des circuits.

Lorsque les pompes à chaleur monobloc sont installées à l'intérieur du bâtiment, un opérateur réalise une ouverture de plus de 1 m² dans le mur, qui est ensuite recouverte par une grille, pour permettre les échanges thermiques entre le fluide frigorigène de la pompe à chaleur et l'extérieur. Cette opération a un lourd impact sur le bâtiment, et nécessite des compétences en maçonnerie et une attention particulière pour respecter l'isolation thermique du bâtiment, ce qui est complexe. De plus, la pompe à chaleur monobloc peut être bruyante à l'intérieur, notamment à cause du compresseur, et le bruit est gênant pour les occupants du bâtiment.

Une deuxième catégorie de pompe à chaleur, les pompes à chaleur « bi-bloc », comprennent une unité extérieure équipée de l'échangeur source et du compresseur, et une unité intérieure équipée de l'échangeur de distribution hydraulique. Ces unités sont séparées et reliées par des conduites dans lesquelles circule en boucle le fluide frigorigène de la pompe à chaleur. Le fluide frigorigène, qui est insensible au gel, circule donc en partie à l'extérieur du bâtiment, et le liquide caloporteur est présent uniquement à l'intérieur du bâtiment, ce qui est avantageux car les pompes à chaleur bi-bloc ne nécessitent donc pas l'emploi d'un antigel. Pour installer une pompe à chaleur bi-bloc, l'opérateur perce dans le mur du bâtiment un trou relativement petit, pour le passage des conduites de fluide frigorigène. Puis, il raccorde les conduites de fluide frigorigène à l'unité extérieure et à l'unité intérieure. Ensuite, l'opérateur fait le vide d'air et remplit les conduites de fluide frigorigène. Cette opération est relativement longue et compliquée, et nécessite un opérateur qualifié capable de manipuler le fluide frigorigène, conformément aux règlementations.

Certaines pompes à chaleur bi-bloc sont portatives. Elles comportent une unité intérieure et une unité extérieure séparées et reliées par une conduite-aller et une conduite-retour du circuit de fluide frigorigène. Le circuit de fluide frigorigène est ainsi confiné dans les conduites de manière permanente et ne nécessite pas d'être manipulée lors de l'installation de la pompe à chaleur, ce qui est avantageux. Une telle pompe à chaleur est utilisée en disposant l'unité extérieure derrière une porte ou une fenêtre. La porte ou la fenêtre est laissée ouverte et les conduites de fluide frigorigène sont placées temporairement dans l'ouverture de la porte ou de la fenêtre, pour permettre l'installation de l'unité intérieure dans le bâtiment.

L'unité intérieure comporte un échangeur thermique qui produit localement de l'air chaud ou froid dans le bâtiment. Ainsi, pour chauffer ou rafraîchir plusieurs pièces d'un bâtiment, il est nécessaire d'utiliser plusieurs pompes à chaleur bi-bloc portatives, ce qui n'est pas avantageux. Par ailleurs, le rendement d'une telle installation est médiocre, à cause des pertes thermiques engendrées par la porte ou la fenêtre ouverte. De plus, elles ne sont pas équipées d'échangeur de distribution hydraulique, ce qui limite les possibilités d'utilisation des pompes à chaleur bi-bloc portatives.

C'est à ces inconvénients qu'entend plus particulièrement remédier l'invention, en proposant un kit de mise en oeuvre d'une installation de régulation de température pour un bâtiment, ainsi qu'une méthode associée, qui a un bon rendement, qui est facile et rapide à installer, polyvalent, peu coûteux et ne nécessite pas d'intervention majeure sur le gros oeuvre du bâtiment.

A cet effet, l'invention a pour objet un kit de mise en oeuvre d'une installation de régulation de température pour un bâtiment, le kit comprenant une pompe à chaleur comprenant :
- une unité de captage, disposée à l'extérieur du bâtiment, pour la transmission de l'énergie thermique captée par l'unité de captage à un circuit primaire de fluide frigorigène confiné,
- une unité de distribution, reliée à l'unité de captage par une conduite-aller et une conduite-retour du circuit primaire.

Selon l'invention, l'unité de distribution transmet l'énergie thermique du circuit primaire à un liquide caloporteur d'un circuit secondaire, disposé à l'intérieur du bâtiment et alimentant un organe de consommation d'énergie thermique. L'unité de distribution comprend une entrée et une sortie, qui sont reliées entre elles par une portion de conduite, qui font partie de du circuit secondaire et qui sont aptes à coopérer chacune de manière amovible avec respectivement une conduite-retour et une conduite-aller du circuit secondaire.

Grâce à l'invention, l'unité de distribution hydraulique est de faible dimension, ce qui lui permet aisément de traverser le bâtiment depuis l'extérieur pour se connecter au circuit secondaire de distribution hydraulique. Le trou percé dans le bâtiment pour le passage de l'unité de distribution hydraulique de la pompe à chaleur est donc de dimensions relativement réduites. Le remplissage de la pompe à chaleur en fluide frigorigène est réalisé en usine. Le fluide frigorigène est ainsi confiné dans le circuit primaire, ce qui facilite l'installation de la pompe à chaleur sur site. Le rendement est amélioré car le liquide caloporteur est présent uniquement à l'intérieur du bâtiment. Par conséquent, il n'est pas nécessaire d'employer un antigel. L'entrée et la sortie de l'unité de distribution permet d'alimenter en énergie thermique une grande variété d'organes de consommation d'énergie thermique, utilisant ou absorbant de l'énergie thermique, par exemple des radiateurs, des planchers chauffants ou des ballons d'eau chaude sanitaire.

Selon des aspects avantageux mais non obligatoires de l'invention, un tel kit peut incorporer une ou plusieurs des caractéristiques suivantes, prises dans toute combinaison techniquement admissible :
- L'organe de consommation d'énergie thermique est constitué par au moins un émetteur thermique tel qu'un circuit de canalisations, un radiateur ou un ventilo-convecteur, pour le chauffage ou le rafraîchissement du bâtiment.
- Les unités de la pompe à chaleur sont reliées par une gaine qui renferme des portions de la conduite-aller et de la conduite-retour du circuit primaire.
- La gaine et les portions de la conduite-aller et de la conduite-retour du circuit primaire, disposées dans la gaine, sont souples.
- L'unité de distribution est globalement de forme allongée et la section transversale maximale de l'unité de distribution a une aire inférieure à 0.03 m², de préférence inférieure à 0.02 m².
- La section transversale de l'unité de distribution s'inscrit dans un cercle dont le diamètre est inférieur à 20 cm, de préférence inférieur à 16 cm.
- L'unité de distribution est de forme allongée et la longueur de l'unité de distribution est supérieure à 2.5 fois la plus grande dimension de la section transversale maximale de l'unité de distribution, de préférence 3,5 fois supérieure.
- La pompe à chaleur est réversible.

L'invention concerne également une méthode de mise en oeuvre d'une installation de régulation de température pour un bâtiment. L'installation comprend, à l'intérieur du bâtiment, un circuit secondaire de liquide caloporteur alimentant un organe de consommation d'énergie thermique, le circuit secondaire étant initialement interrompu et comportant une entrée et une sortie, l'installation comprenant également un kit qui comprend une pompe à chaleur comportant :
- une unité de captage, pour la transmission de l'énergie thermique captée par l'unité de captage à un circuit primaire de fluide frigorigène confiné,
- une unité de distribution, reliée à l'unité de captage par une conduite-aller et une conduite-retour du circuit primaire, pour la transmission de l'énergie thermique du fluide frigorigène au liquide caloporteur du circuit secondaire, l'unité de distribution renfermant une portion de conduite comportant une entrée et une sortie.

La méthode comporte des étapes dans lesquelles :
- a) un opérateur réalise un trou dans un mur du bâtiment,
- b) l'opérateur dispose le kit à l'extérieur du bâtiment,
- c) l'opérateur insère l'unité de distribution dans le trou, jusqu'à ce que l'unité de distribution soit disposée à l'intérieur du bâtiment 100,
- d) l'opérateur raccorde respectivement l'entrée et la sortie de l'unité de distribution à une conduite-retour et à une conduite-aller du circuit secondaire,
- e) l'opérateur réalise le remplissage en liquide caloporteur du circuit secondaire.

Avantageusement, la méthode comprend en outre une étape f), se déroulant après l'étape c), dans laquelle l'opérateur rebouche le trou, autour de la conduite-aller et de la conduite retour du circuit primaire. Ainsi, l'isolation du bâtiment 100 n'est pas dégradée.

L'invention sera mieux comprise et d'autres avantages de celle-ci apparaîtront plus clairement à la lumière de la description qui va suivre d'un kit et d'une méthode de mise en oeuvre d'une installation de régulation de température pour un bâtiment, donnée uniquement à titre d'exemple et faite en référence aux dessins annexés dans lesquels :
- les figures 1 à 3 sont des vues schématiques d'un kit conforme à l'invention, lors de son installation ;
- les figures 4 à 7 sont des vues schématiques du kit des figures 1 à 3, utilisé dans quatre installations différentes.

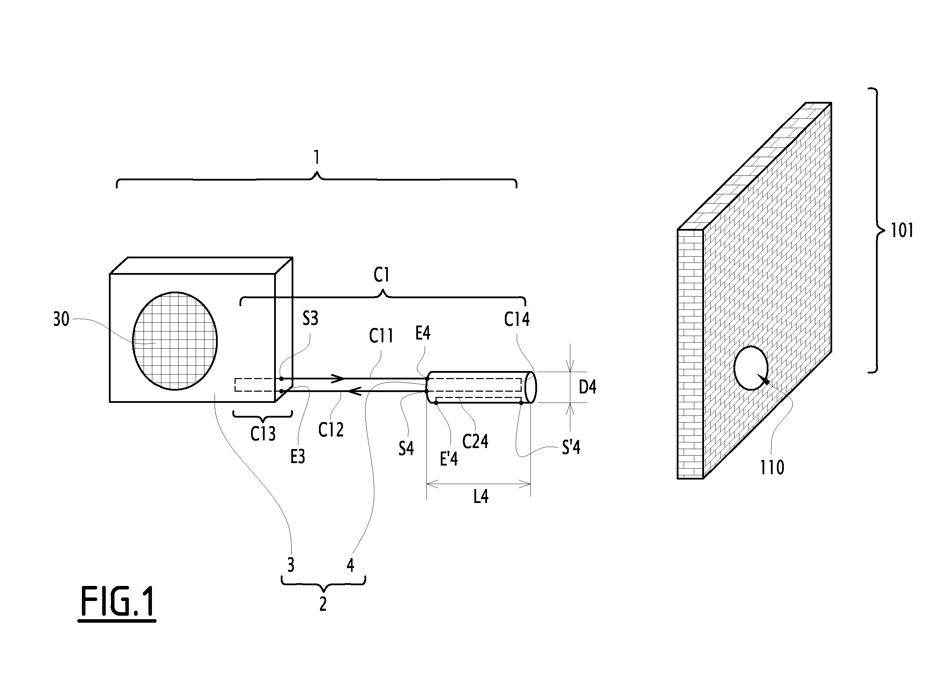

Les figures 1 à 3 montrent un kit 1, comprenant une pompe à chaleur 2 qui comprend une unité extérieure 3 et une unité intérieure 4, placées respectivement à l'extérieur et à l'intérieur d'un bâtiment 100, lorsque le kit 1 est en configuration installée. A la figure 1, seul un mur 101 du bâtiment 100, qui sépare l'intérieur de l'extérieur du bâtiment 100, est représenté.

L'unité extérieure ou unité de captage 3 comprend un échangeur source qui prélève de l'énergie thermique à l'air ambiant extérieur du bâtiment, au travers d'une grille 30, et transfère l'énergie thermique prélevée à un circuit primaire de fluide frigorigène C1. L'unité de captage 3 comprend également un compresseur agissant sur le fluide frigorigène. Le circuit primaire C1 comprend une conduite-aller C11 qui relie une sortie S3 l'unité de captage 3 à une entrée E4 de l'unité intérieure ou unité de distribution 4, ainsi qu'une conduite-retour C12, qui relie une sortie S4 de l'unité de distribution 4 à une entrée E3 de l'unité de captage 3. Des parties C13 et C14 du circuit primaire C1, représentées schématiquement en pointillés, circulent respectivement à l'intérieur des unités 3 et 4. Sur les figures, les flèches représentées sur les conduites représentent le sens de circulation du fluide.

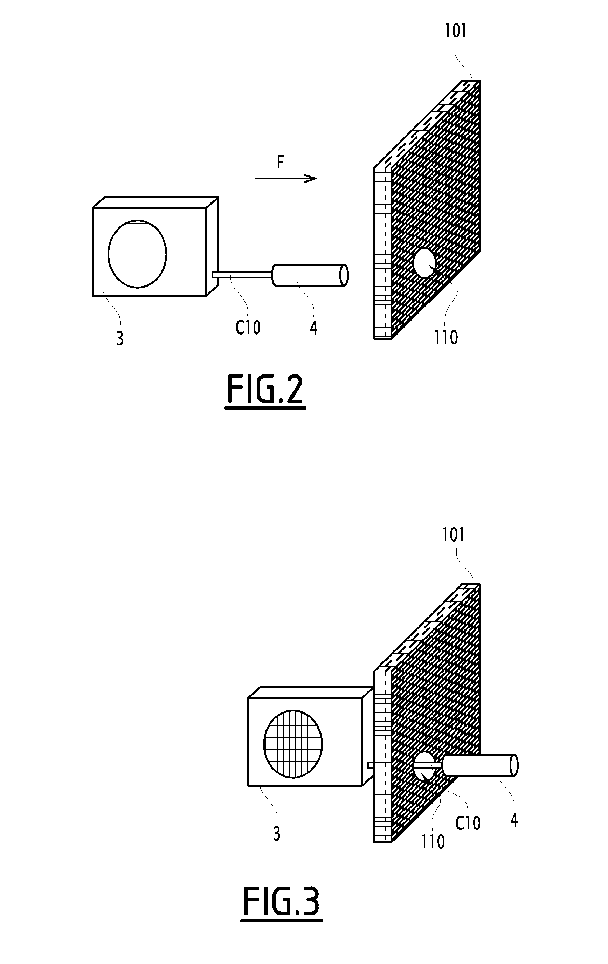

En pratique, les parties des conduites C11 et C12 disposées entre les unités 3 et 4 sont placées à l'intérieur d'une même gaine de protection C10, visible aux figures 2 et 3, qui n'est pas représentée à la figure 1 pour la clarté de la figure. La gaine C10 est les parties des conduites C11 et C12 disposées à l'intérieur de la gaine C10 sont souples, pour faciliter l'installation du kit 1 et permettre de disposer l'unité intérieure 4 dans la configuration souhaitée.

L'unité intérieure ou unité de distribution 4 se présente sous la forme d'une cartouche cylindrique, de section circulaire, à l'intérieur de laquelle est logée la partie C14 du circuit primaire C1. Comme expliqué plus en détail dans la suite, l'unité intérieure 4 se connecte à un circuit secondaire de liquide caloporteur C2 qui alimente en énergie thermique au moins un organe de consommation d'énergie thermique, qui utilise ou absorbe de l'énergie thermique, tel qu'un ventilo-convecteur, un radiateur ou un circuit de canalisations d'un plancher chauffant. L'unité de distribution 4 comprend un échangeur thermique de distribution hydraulique, qui transfère l'énergie thermique du fluide frigorigène du circuit primaire C1 au liquide caloporteur du circuit secondaire C2. L'

Une portion C24 du circuit secondaire C2 est logée à l'intérieur de l'unité de distribution 4, et comporte une entrée E'4 et une sortie S'4. Avant l'installation du kit 4, la portion C24 est vide. L'entrée E'4 et la sortie S'4 sont prévues pour être raccordées de manière amovible à des conduites C21 et C22 du circuit secondaire C2.

La portion C14 du circuit primaire C1 et la portion C24 du circuit secondaire C2 sont représentées schématiquement à la figure 1. En pratique, la géométrie et la disposition relative des portions C14 et C24 est prévue pour assurer un échange thermique satisfaisant entre le fluide frigorigène du circuit primaire C1 et le liquide caloporteur du circuit secondaire C2.

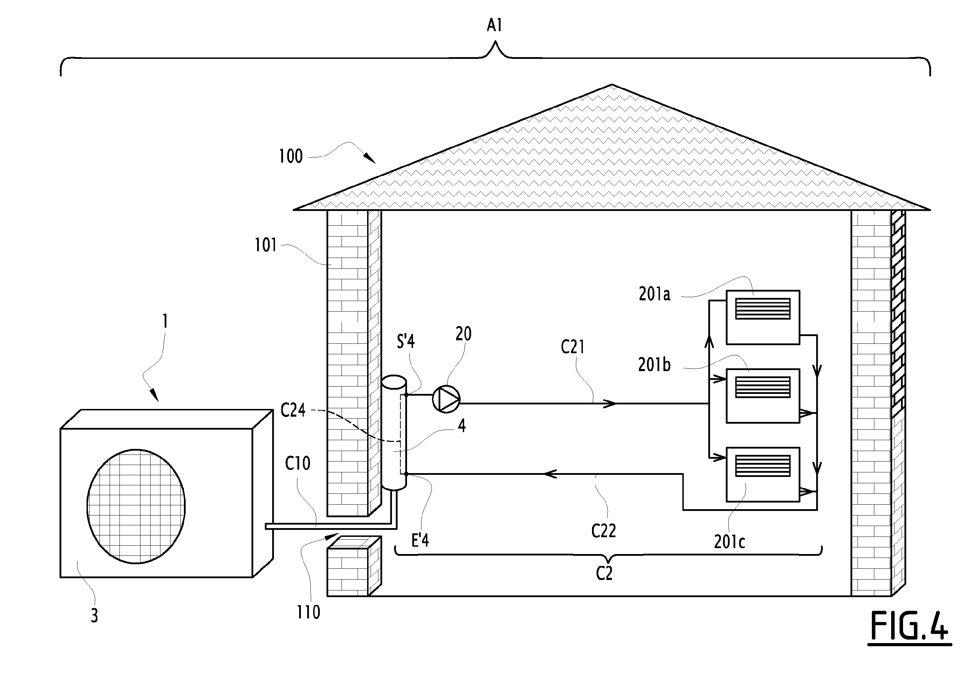

La figure 4 montre une première installation A1 de régulation de température du bâtiment 100, dans laquelle le kit 1 est utilisé pour alimenter en énergie thermique trois ventilo-convecteurs 201a, 201b et 201c. L'unité de captage 3 du kit 1 est placée à l'extérieur du bâtiment 100, et l'unité de distribution 4 est placée à l'intérieur du bâtiment 100. Le mur 101 comporte un trou 110 pour le passage de la gaine C10.

La sortie S'4 de l'unité de distribution 4 est raccordée à l'extrémité amont d'une conduite aller C21 du circuit secondaire C2, sur laquelle est installée une pompe 20 qui fait circuler le liquide caloporteur dans le circuit secondaire C2. L'extrémité aval de la conduite aller C21 est raccordée aux ventilo-convecteurs 201a, 201b et 201c, qui sont reliés en parallèle. Chaque ventilo-convecteur 201a, 201b et 201c est relié à l'extrémité amont d'une conduite-retour C22 du circuit secondaire C2, raccordée à l'entrée E'4 de l'unité de distribution 4.

Le diamètre maximal D4 de l'unité de distribution 4 est inférieur à 20 cm, de préférence inférieur à 16 cm. Le diamètre de l'échangeur de distribution hydraulique, qui fait partie de l'unité de distribution 4, est donc également inférieur à 20 cm, de préférence inférieur à 16 cm.

La section transversale maximale de l'unité de distribution 4 a une aire inférieure à 0.03 m², de préférence inférieure à 0.02 m²

L'unité de distribution 4 est de forme allongée. On note L4, la longueur de l'unité de distribution 4. La longueur L4 est supérieure à 2.5 fois le diamètre D4, de préférence 3,5 fois supérieure.

En variante, la section de l'unité de distribution 4 n'est pas circulaire. Dans ce cas, la longueur L4 est supérieure à 2.5 fois la plus grande dimension de la section transversale maximale de l'unité de distribution 4, de préférence 3,5 fois supérieure. Par exemple, si la section de l'unité de distribution 4 est carrée, la plus grande dimension est la diagonale du carré. De plus, lorsque la section de l'unité de distribution 4 n'est pas circulaire, sa section transversale maximale s'inscrit de préférence dans un cercle dont le diamètre est inférieur à 20 cm, de préférence inférieur à 16 cm.

En fonctionnement, l'unité de captage 3 capte de l'énergie thermique de l'air ambiant extérieur et la transfère au liquide frigorigène circulant dans le circuit primaire C1. Puis, à l'intérieur de l'unité de distribution 4, le fluide frigorigène transfère son énergie thermique au liquide caloporteur du circuit secondaire C2. La pompe 20 fait circuler le liquide caloporteur dans les ventilo-convecteurs 201a, 201b et 201c, qui chauffent ou rafraichissent le bâtiment 100, selon que la pompe à chaleur fonctionne en mode chauffage ou en mode rafraichissement.

En pratique, la pompe à chaleur 2 peut être réversible, ou fonctionner uniquement en mode chauffage ou en mode rafraichissement.

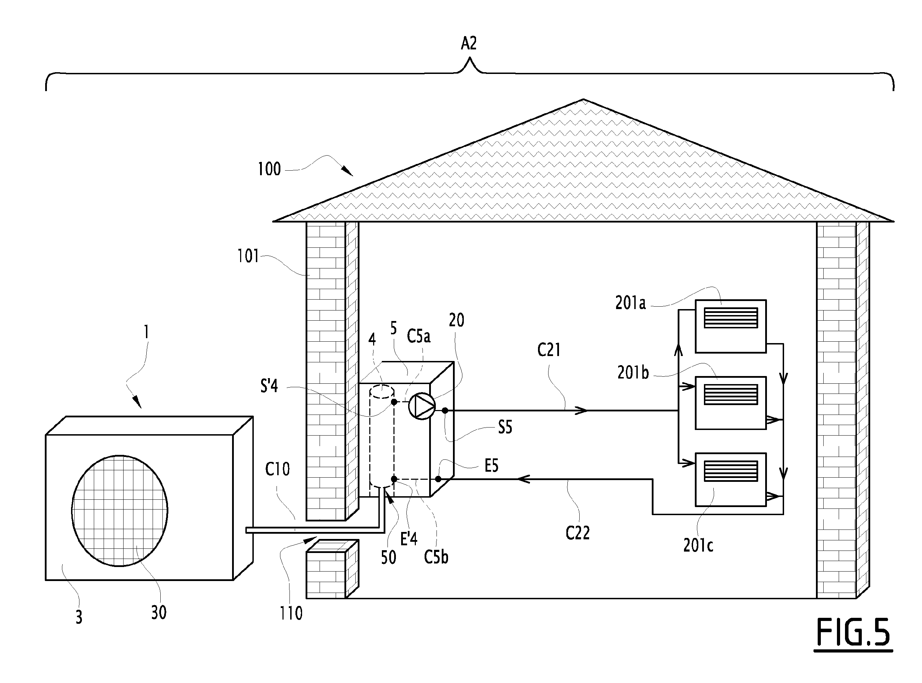

La suite de la description concerne une méthode de mise en oeuvre de l'installation A1 de la figure 5.

Cette méthode comprend une étape a), dans laquelle un opérateur réalise un trou 110 dans un mur 101 du bâtiment 100. Les dimensions du trou 110 sont choisies légèrement supérieures à la dimension maximale de la section de l'unité de distribution 4.

Lorsque le kit 1 est installé dans un bâtiment 100 neuf, le trou 110 est constitué par une réservation que l'opérateur réalise lors de la construction du mur 101. Lorsque le bâtiment 100 est ancien, l'opérateur perce un trou dans le mur 101.

Dans une étape b), l'opérateur dispose le kit 1 à l'extérieur du bâtiment 100, comme représenté à la figure 1, où l'extérieur du bâtiment 100 se trouve à gauche du mur 101 et où l'intérieur du bâtiment 100 se trouve à droite du mur 101.

Dans une étape c), l'opérateur insère l'unité de distribution 4 dans le trou 110, comme représenté par la flèche F à la figure 2, jusqu'à ce que l'unité de distribution 4 soit située entièrement à l'intérieur du bâtiment 100, comme représenté à la figure 3. Eventuellement, on positionne et on oriente l'unité de distribution 4 dans le bâtiment 100 en pliant la gaine C10 et les conduites C11 et C12, grâce à leur souplesse.

Dans une étape d), l'opérateur raccorde respectivement l'entrée E'4 et la sortie S'4 de l'unité de distribution 4 à la conduite-retour C22 et à la conduite-aller C21 du circuit secondaire C2.

Dans une étape e), l'opérateur réalise le remplissage en liquide caloporteur du circuit secondaire C2. Eventuellement, le remplissage peut être effectué partiellement avant l'installation du kit 1. Dans ce cas, lors de l'étape e), l'opérateur finalise le remplissage. Dans l'étape e), par « réaliser le remplissage », on entend que l'opérateur le réalise au moins en partie, sachant qu'il peut se limiter à la finalisation du remplissage.

Dans une étape f), se déroulant après l'étape c), l'opérateur rebouche le trou 110, autour de la conduite-aller C11 et de la conduite retour C12 du circuit primaire C1. Ainsi, les fuites thermiques entre l'intérieur et l'extérieur du bâtiment 100 sont évitées, ce qui améliore le rendement de l'installation A1.

Cette méthode de mise en oeuvre est simple et rapide. L'opérateur n'a pas besoin d'avoir des compétences particulières pour la manipulation du fluide frigorigène, puisque ce dernier est confiné dans le circuit primaire C1. Le remplissage du fluide frigorigène s'effectue en usine, lors de la fabrication du kit 1.

Le trou 110 réalisé dans le bâtiment 100 a une section relativement faible, en comparaison avec les pompes à chaleur monobloc intérieures, puisque ses dimensions sont sensiblement égales à celles de la section de l'unité intérieure, qui est compacte. Il n'est pas nécessaire que le trou 110 soit suffisamment grand pour permettre les échanges thermiques entre l'unité de captage 3 et l'air ambiant extérieur, puisque l'unité de captage 3 se trouve à l'extérieur du bâtiment 100.

Les figures 5, 6 et 7 montrent une deuxième, une troisième et une quatrième installations A2, A3 et A4, dans lesquelles les éléments analogues à ceux de la première installation A1 portent les mêmes références et ne sont pas décrits à nouveau.

Dans la deuxième installation A2, le kit 1 est utilisé pour alimenter en énergie thermique trois ventilo-convecteurs 201a, 201b et 201c, par l'intermédiaire d'un coffret hydraulique 5 comportant un logement cylindrique 50, à section circulaire, dans lequel est logée l'unité de distribution 4.

Le coffret 5 renferme des portions de conduites C5a et C5b qui font partie du circuit secondaire C2. L'extrémité amont de la portion C5a est raccordée à la sortie S'4 de l'unité de distribution 4 et l'extrémité aval de la portion C5a est raccordée à la pompe 20, qui fait partie du coffret 5. Le coffret 5 comporte une sortie S5 raccordée à la sortie de la pompe 20, qui est raccordée à l'extrémité amont de la conduite-aller C21 du circuit secondaire C2. L'extrémité aval de la conduite aller C21 est raccordée à chaque ventilo-convecteurs 201a, 201b et 201c. Les ventilo-convecteurs 201a, 201b et 201c sont branchés en parallèle et leur sortie est reliée à l'extrémité amont de la conduite-retour C22 du circuit secondaire C2. L'extrémité aval de la conduite-retour C22 est branchée sur une entrée E5 du coffret 5, raccordée à l'entrée E'4 de l'unité de distribution 4.

Le fonctionnement de la deuxième installation A2 est analogue à celui de la première installation A1. L'utilisation d'un coffret 5 permet de regrouper dans une seule unité tous les organes nécessaires au bon fonctionnement de l'installation A2 (pompe, vase d'expansion, purgeurs, soupapes...).

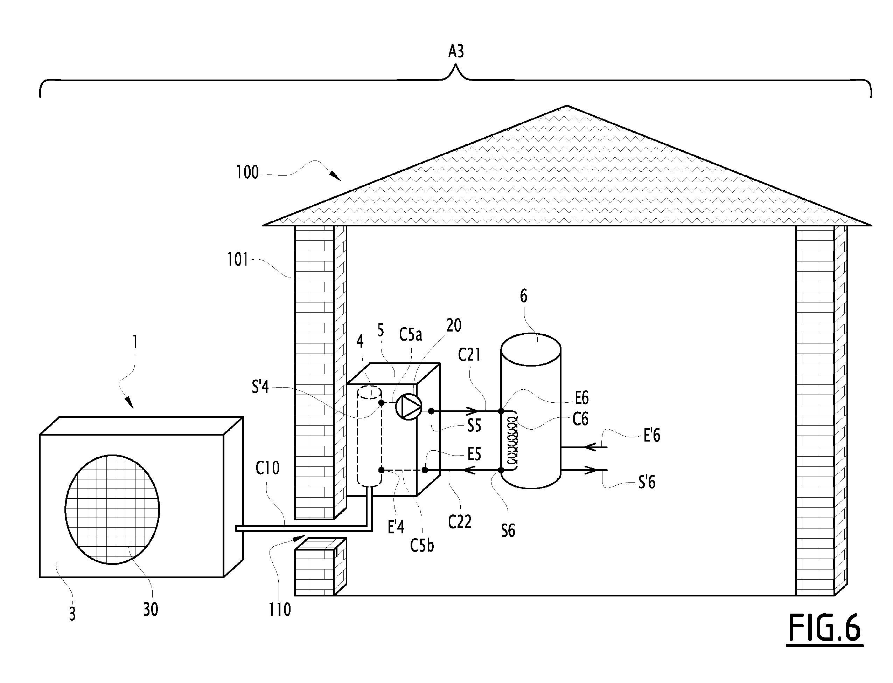

Dans l'installation A3 de la figure 6, le kit 1 est utilisé pour alimenter en énergie thermique un ballon d'eau chaude sanitaire 6, placé à l'intérieur du bâtiment 100. L'installation A3 comprend un coffret hydraulique 5, analogue à celui de l'installation A2. La sortie S5 du coffret 5 est raccordée à l'extrémité amont de la conduite aller C21 du circuit secondaire C2. L'extrémité aval de la conduite aller C21 est raccordée à une première entrée E6 d'une conduite C6 disposée à l'intérieur du ballon 6. Une première sortie S6 de la conduite E6 est raccordée à l'extrémité amont de la conduite retour C22 du circuit secondaire C2. L'extrémité aval de la conduite retour C22 est raccordée à l'entrée E5 du coffret 5.

En fonctionnement, une seconde entrée E'6 du ballon 6 est alimentée en eau froide. Cette eau froide est chauffée par la portion C6 du circuit secondaire C2. Une seconde sortie S'6 du ballon 6 alimente en eau chaude les points d'eau du bâtiment 100.

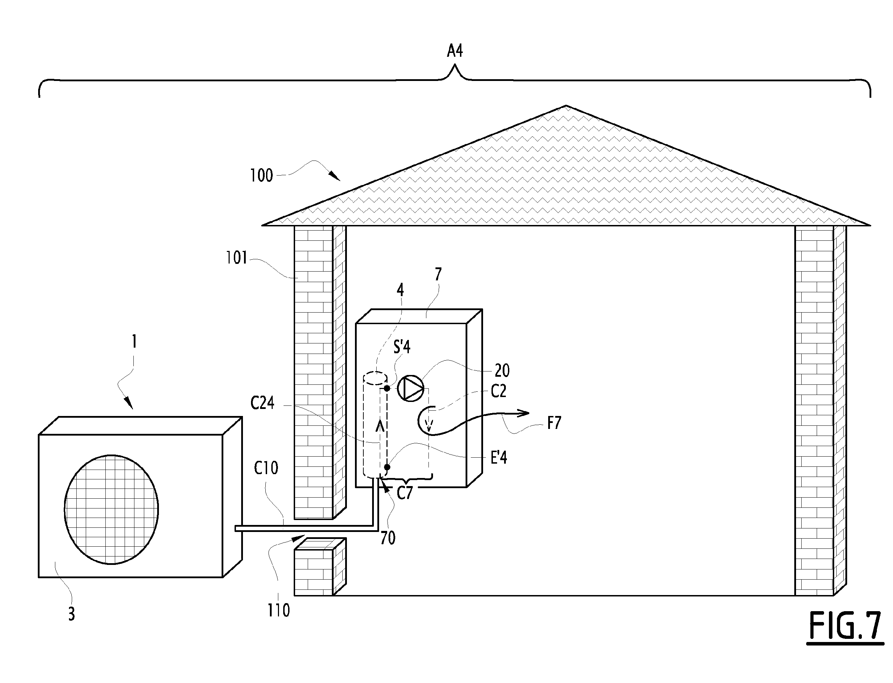

Dans l'installation A4 de la figure 7, le kit 1 est utilisé pour alimenter en énergie thermique un émetteur d'énergie thermique 7, qui diffuse un flux d'air chaud ou froid F7 dans le bâtiment 100, selon que la pompe à chaleur 2 fonctionne en mode chauffage ou rafraîchissement.

L'émetteur 7 comporte un logement cylindrique 70, à section circulaire, dans lequel est logée l'unité de distribution 4. En variante, lorsque l'unité de distribution 4 n'a pas une section circulaire, la géométrie du logement cylindrique 70 est adaptée à celle de l'unité de distribution, de manière à assurer un contact surfacique avec l'unité de distribution 4. De préférence, la section maximale du logement cylindrique 70 est inférieure à 0,03 m², de préférence encore inférieure à 0,02 m².

L'émetteur 7 comprend une portion de conduite C7 qui forme, avec la portion de conduite C24 disposée dans l'unité de distribution 4, le circuit C2. Ainsi, les extrémités de la portion C7 sont raccordées à l'entrée E'4 et à la sortie S'4 de l'unité intérieure 4. L'émetteur 7 intègre une pompe 20 agissant sur le liquide caloporteur circulant dans le circuit C2. L'émetteur 7 comporte des moyens non représentés, par exemple, des moyens de mise en dépression tels qu'un ventilateur, qui font circuler de l'air à l'intérieur de l'émetteur 7, le long de la portion C7 du conduit C2. Ces moyens peuvent être mécaniques et, en variante, les échanges thermiques entre le circuit C2 et l'air du bâtiment 100 se font naturellement, par exemple par convection naturelle.

En fonctionnement, l'énergie thermique circuit secondaire C2 est transmise au flux d'air F7, qui est diffusé dans le bâtiment 100, afin de le chauffer ou de le rafraîchir, selon que la pompe à chaleur 2 fonctionne en mode chauffage ou rafraîchissement.

Le kit 1 est polyvalent. Il peut être utilisé pour le chauffage ou le rafraichissement d'une grande variété d'organes de consommation d'énergie thermique. Dans les installations A1 et A2, l'organe de consommation d'énergie thermique est constitué par chaque ventilo-convecteur 201a, 201b et 201c. Dans l'installation A3, il s'agit du ballon 6 et dans l'installation A4, il s'agit de l'émetteur 7.

## Revendications

1. Kit (1) de mise en oeuvre d'une installation (A1 ; A2 ; A3 ; A4) de régulation de température pour un bâtiment (100), le kit (1) comprenant une pompe à chaleur (2) comprenant :
- une unité de captage (3), disposée à l'extérieur du bâtiment (100), pour la transmission de l'énergie thermique captée par l'unité de captage (3) à un circuit primaire (C1) de fluide frigorigène confiné,
- une unité de distribution (4), reliée à l'unité de captage (3) par une conduite-aller (C11) et une conduite-retour (C12) du circuit primaire (C1),
**caractérisé en ce que** l'unité de distribution (4) transmet l'énergie thermique du circuit primaire (C1) à un liquide caloporteur d'un circuit secondaire (C2), disposé à l'intérieur du bâtiment et alimentant un organe de consommation d'énergie thermique (201a, 201b, 201c ; 6 ; 7), et **en ce que** l'unité de distribution (4) comprend une entrée (E'4) et une sortie (S'4), qui sont reliées entre elles par une portion de conduite (C24), qui font partie de du circuit secondaire (C2) et qui sont aptes à coopérer chacune de manière amovible avec respectivement une conduite-retour (C22) et une conduite-aller (C21) du circuit secondaire (C2).

2. Kit (1) selon la revendication 1, **caractérisé en ce que** l'organe de consommation d'énergie thermique est constitué par au moins un émetteur thermique (201a, 201b, 201c ; 7) tel qu'un circuit de canalisations, un radiateur ou un ventilo-convecteur, pour le chauffage ou le rafraîchissement du bâtiment (100, ou par un ballon d'eau chaude sanitaire (8).

3. Kit (1) selon l'une des revendications précédentes, **caractérisé en ce que** les unités (3, 4) de la pompe à chaleur (2) sont reliées par une gaine (C10) qui renferme des portions de la conduite-aller (C11) et de la conduite-retour (C12) du circuit primaire (C1).

4. Kit (1) selon la revendication 3, **caractérisé en ce que** la gaine (C10) et les portions de la conduite-aller (C11) et de la conduite-retour (C12) du circuit primaire (C1), disposées dans la gaine (C10), sont souples.

5. Kit (1) selon l'une des revendications précédentes, **caractérisé en ce que** l'unité de distribution (4) est globalement de forme allongée et **en ce que** la section transversale maximale de l'unité de distribution a une aire inférieure à 0.03 m², de préférence inférieure à 0.02 m².

6. Kit (1) selon la revendication 5, **caractérisé en ce que** la section transversale maximale de l'unité de distribution (4) s'inscrit dans un cercle dont le diamètre (D4) est inférieur à 20cm, de préférence inférieur à 16 cm.

7. Kit (1) selon l'une des revendications précédentes, **caractérisé en ce que** l'unité de distribution (4) est de forme allongée et **en ce que** la longueur (L4) de l'unité de distribution (4) est supérieure à 2.5 fois la plus grande dimension de la section transversale maximale de l'unité de distribution (4), de préférence 3,5 fois supérieure.

8. Kit (1) selon l'une des revendications précédentes, **caractérisé en ce que** la pompe à chaleur (2) est réversible.

9. Méthode de mise en oeuvre d'une installation (A1 ; A2 ; A3 ; A4) de régulation de température pour un bâtiment (100), l'installation (A1 ; A2 ; A3 ; A4), **caractérisée en ce que** l'installation (A1 ; A2 ; A3 ; A4) comprend, à l'intérieur du bâtiment (100), un circuit secondaire (C2) de liquide caloporteur alimentant un organe de consommation d'énergie thermique (201a, 201b, 201c ; 6 ; 7), le circuit secondaire (C2) étant initialement interrompu et comportant une entrée (E2) et une sortie (S2), l'installation (A1 ; A2 ; A3 ; A4) comprenant également un kit (1) qui comprend une pompe à chaleur (2) comportant :
- une unité de captage (3), pour la transmission de l'énergie thermique captée par l'unité de captage (3) à un circuit primaire (C1) de fluide frigorigène confiné,
- une unité de distribution (4), reliée à l'unité de captage (3) par une conduite-aller (C11) et une conduite-retour (C12) du circuit primaire (C1), pour la transmission de l'énergie thermique du fluide frigorigène au liquide caloporteur du circuit secondaire (C2), l'unité de distribution (4) renfermant une portion de conduite (24) comportant une entrée (E'4) et une sortie (S'4),
la méthode étant **caractérisée en ce qu'**elle comporte des étapes dans lesquelles :
- a) un opérateur réalise un trou (110) dans un mur (101) du bâtiment (100),
- b) l'opérateur dispose le kit (1) à l'extérieur du bâtiment (100),
- c) l'opérateur insère l'unité de distribution (4) dans le trou (110), jusqu'à ce que l'unité de distribution (4) soit disposée à l'intérieur du bâtiment 100,
- d) l'opérateur raccorde respectivement l'entrée (E'4) et la sortie (S'4) de l'unité de distribution (4) à une conduite-retour (C22) et à une conduite-aller (C21) du circuit secondaire (C2),
- e) l'opérateur réalise le remplissage en liquide caloporteur du circuit secondaire (C2).

10. Méthode selon la revendication 9, **caractérisée en ce qu'**elle comprend en outre une étape f), se déroulant après l'étape c), dans laquelle l'opérateur rebouche le trou (110), autour de la conduite-aller (C11) et de la conduite retour (C12) du circuit primaire (C1).
